# EUROPÄISCHE PATENTSCHRIFT

(11) **EP 1 664 597 B1**
(45) Veröffentlichungstag und Bekanntmachung des Hinweises auf die Patenterteilung: **11.07.2007**
(21) Anmeldenummer: 04786701.5
(22) Anmeldetag: 01.09.2004
(51) Int. Cl.: F16J 9/20, F16J 9/06

(54) **MEHRTEILIGER ÖLABSTREIFRING FÜR KOLBEN VON VERBRENNUNGSMOTOREN**
MULTIPART OIL WIPING RING FOR PISTONS OF INTERNAL COMBUSTION ENGINES
SEGMENT RACLEUR D'HUILE EN PLUSIEURS PARTIES POUR PISTONS DE MOTEURS A COMBUSTION INTERNE

(30) Priorität: 02.09.2003 DE 10340312
(43) Veröffentlichungstag der Anmeldung: 07.06.2006
(73) Patentinhaber: MAHLE GMBH, 70376 Stuttgart (DE)
(72) Erfinder: FIEDLER, Rolf-Gerhard, 73240 Wendlingen (DE)
(74) Vertreter: Pohle, Reinhard
(86) Internationale Anmeldenummer: PCT/DE2004/001939
(87) Internationale Veröffentlichungsnummer: WO 2005/024277

(56) Entgegenhaltungen:
- WO-A-03/058096
- FR-A- 2 723 401
- US-A- 6 039 321
- PATENT ABSTRACTS OF JAPAN Bd. 2000, Nr. 20, 10. Juli 2001 (2001-07-10) -& JP 2001 082605 A (NIPPON PISTON RING CO LTD), 30. März 2001 (2001-03-30)

## Beschreibung

Die Erfindung betrifft einen mehrteiligen Ölabstreifring für Kolben von Verbrennungsmotoren mit zwei aus Stahlband bestehenden Lamellen mit parallelen Flanken, deren Laufflächen jeweils eine ballig asymmetrische Form mit einer über den Umfang der Lamellen erstreckenden Scheitelpunktlinie aufweisen, sowie einer zwischen den Lamellen angeordneten Spreizfeder, welche die Lamellen sowohl axial gegen jeweils eine der Flanken einer Ringnut im Kolben als auch radial gegen die Zylinderwand drückt.

Um zu verhindern, dass zuviel Motoröl in den Brennraum gelangt, was neben einem hohen Ölverbrauch auch negative Auswirkungen auf das Emissionsverhalten des Motors zur Folge hat, ist eine ausreichende Tangentialkraft der Ölabstreifringe zur Erzeugung einer radialen Anpressung an die Zylinderwand und damit einer guten Ölabstreifwirkung notwendig. Das bewirkt jedoch eine hohe Flächenpressung an den Laufflächen der Stahl-Lamellen und damit auch eine hohe Reibleistung im Motorbetrieb. Diese Reibleistung verschlechtert den Wirkungsgrad des Verbrennungsmotors und erhöht demzufolge den Kraftstoffverbrauch. Die Auslegung der Tangentialkraft der Ölabstreifringe ist deshalb immer ein Kompromiss zwischen minimaler Reibleistung und maximaler Ölabstreifwirkung. Sämtliche Maßnahmen zur Verminderung der Reibleistung im motorischen Betrieb ohne Reduzierung der Tangentialkraft erleichtern somit die Auslegung der Ölabstreifringe bzw. verbessern den Wirkungsgrad des Motors.

Dementsprechend wurde für gattungsgemäße Ölabstreifringe neben einer speziellen Gestaltung der Spreizfeder versucht, die Laufflächen der Lamellen derart zu formen, dass diese den vorgenannten Forderungen gerecht werden. Bekannt sind u.a. zur Zylinderwand planparallel verlaufende Laufflächen, wie in der US 3,738,668 angegeben, auch Laufflächenkonturen, die symmetrisch ballig ausgeführt sind, wie in der DE 36 38 728 A1 beschrieben. Mehrteilige Ölabstreifringe mit symmetrisch ballig ausgeführten Laufflächen der Lamellen werden dabei in beliebiger, d.h. nicht orientierter Einbaulage im Kolben montiert.

Asymmetrische Laufflächen von Ölabstreifringen bzw. Kolbenringen sind aus der DE 38 33 322 A1, DE 43 00 531 C1 oder DE 44 29 649 C2 bekannt. Ebenso ist aus der US 6,039,321 A ein aus zwei Lamellen und einer zickzackförmigen Spreizfeder gebildeter Ölabstreifring bekannt, dessen Laufflächen ballig asymmetrisch ausgebildet sind. Ein ähnlicher Ölabstreifring, jedoch unter Verwendung einer anders artig geformten Spreizfeder, ist aus der FR 2 723 401 bekannt. Diese Ausführungsformen sind jedoch nur auf Einzelringe bezogen, wobei Angaben bezüglich möglicher Einbaulagen in Bezug zu mehrteiligen Ölabstreifringen den Schriften nicht entnommen werden können.

Es ist Aufgabe der Erfindung, einen mehrteiligen Ölabstreifring für einen Kolben eines Verbrennungsmotors anzugeben, der gegenüber dem bekannten Stand der Technik eine verbesserte Ölabstreifwirkung bei einem reduzierten Verschleiß der Lauffläche aufweist.

Gelöst wird die Aufgabe, in dem die Laufflächen beider Lamellen derart ausgebildet sind, dass sie eine ballig asymmetrische Form aufweisen, welche aus einem ersten und einem zweiten parabolischen Abschnitt bestehen, wobei der zweite parabolische Abschnitt eine stärkere Krümmung aufweist als der erste.

Die Laufflächen der Lamellen zeichnen sich des weiteren durch eine asymmetrische Neigung mit einer gegenüber dem Stand der Technik stark reduzierten Balligkeit aus, wobei die Laufflächenkontur näherungsweise durch ein Polynom 2. Ordnung beschrieben werden kann.

In einer weiteren Ausgestaltung der Erfindung sind die Laufflächen der Lamellen mit ihren Scheitelpunktlinien jeweils gleichsinnig zur kolbenbodenabgewandten Ringnutflanke hin orientiert.

Durch die erfindungsgemäße Laufflächengestaltung und der Anordnung der Lamellen zueinander wird durch eine günstigere hydrodynamische Bedingung an einer der beiden Lamellen eine Verminderung der Reibleistung des gesamten Stahlband-Ölabstreifringes ohne eine Reduzierung der Tangentialkraft erreicht, wobei die ölabstreifende Funktion der anderen Lamelle hierbei in vollem Umfang erhalten bleibt.

Die Reduzierung der Reibleistung bewirkt dadurch eine Verbesserung des Wirkungsgrades des Motors oder es kann durch eine Erhöhung der Tangentialkraft bei unverändertem Reibleistungsniveau das Ölabstreifverhalten verbessert werden.

Zweckmäßige Ausgestaltungen der Erfindung sind Gegenstand der Unteransprüche.

Ein Ausführungsbeispiel der Erfindung wird im Folgenden anhand der Zeichnungen beschrieben. Es zeigen
- Fig. 1: einen Querschnitt des erfindungsgemäßen Ölabstreifringes in einer ersten Ausführung, und
- Fig. 2: einen Querschnitt des erfindungsgemäßen Ölabstreifringes in einer zweiten Ausführung.

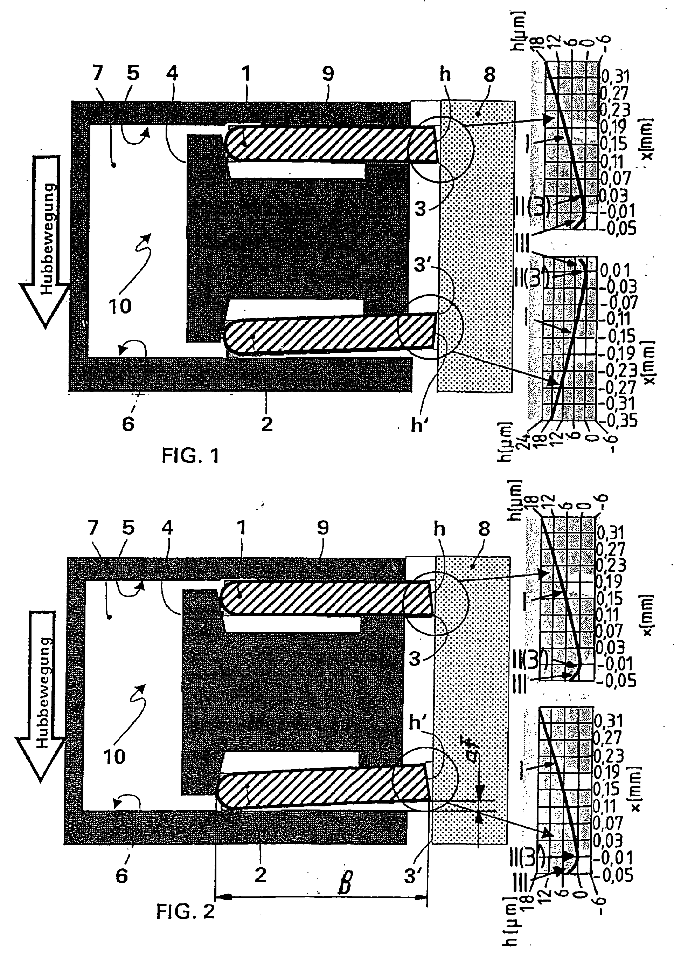

Wie aus Fig. 1 ersichtlich, besteht ein mehrteiliger Ölabstreifring 10 aus zwei Stahlband-Lamellen 1 und 2 und einer Spreizfeder 4, welche die Lamellen sowohl axial gegen jeweils eine der Flanken 5 und 6 der Ringnut 7 im Kolben als auch radial gegen die Zylinderwand 8 drückt. Die Ringnutflanke 5 stellt die kolbenbodenseitige und die Ringnutflanke 6 die dem Kolbenboden abgewandte Seite dar. Erfindungsgemäß weist die Lamelle 1 eine ballig asymmetrische geformte Lauffläche h mit einer über den Umfang der Lamelle erstreckenden Scheitelpunktlinie 3 und die Lamelle 2 eine ballig asymmetrische Lauffläche h' mit einer Scheitelpunktlinie 3' auf, wobei die jeweiligen Scheitellinien 3, 3' als in Kontakt zur Zylinderwand 8 stehende Kanten zum Ölabstreifen wirken. In einem ersten Ausführungsbeispiel nach Fig. 1 sind die Lamellen 1 und 2 in ihrem montierten Zustand im Kolben derart zueinander angeordnet, dass ihre Scheitellinien 3, 3' (Kanten) jeweils in Richtung Mitte der Ringnut 7 ausgerichtet sind. Gemäß Fig. 1 soll diese Lamellenanordnung als gegensinnig verstanden werden, hingegen nach Fig. 2 die Anordnung der Lamellen zueinander als gleichsinnig zu verstehen ist. In diesem Ausführungsbeispiel sind beide Scheitelpunktlinien 3, 3' (Kanten) von der kolbenbodenseitigen Ringnutflanke 5 weg weisend zwischen der Spreizfeder 4 angeordnet.

Erfindungsgemäß haben die Laufflächen h und h' der Lamellen eine Form, die einem Einlaufvorgang von mehreren hundert Stunden im Motorbetrieb entspricht. Diese ist dadurch charakterisiert, dass die Laufflächen h, h' beider Lamellen 1 und 2 im Querschnitt in einem ersten Abschnitt (I) näherungsweise der asymmetrischen Form eines Polynoms 2. Ordnung mit h(x)= ax + bx² folgt, wobei x= Laufflächenkoordinate im kartesischen Koordinatensystem in mm ist und a, b Koeffizienten, mit a definiert durch das Verhältnis des axialen Flankenspiels aF der Lamellen zur Breite B der Lamellen. aF = Abstand zwischen Ringnutflanke und Lamelle, gemessen am Außendurchmesser der Ringnut (s. Fig. 2), B = Gesamtbreite der Lamelle (s. Fig. 2); b definiert als Betrag der Laufflächenkrümmung; einem als Kante ausgeführten tragenden Scheitel (II) h(x=0), und in einem dritten Abschnitt (III) näherungsweise der asymmetrischen Form der Funktion h(x)= cx², mit c als einem Vielfachen von b, folgt. Als Beispiel für Lamellen mit einer Dicke von 0,4 mm ergibt sich ein Wert h(x)= 35x + 50x². Damit sind die entsprechend Fig. 1 und 2 dargestellten Querschnittskurven mit x als Laufflächenkoordinate in mm und h(x) als Balligkeit in µm erzielbar. Es ist verständlich, dass die Koeffizienten dieses Polynoms auf die spezifische Anwendung abzustimmen sind, wobei wesentliche Parameter hierbei der Zylinderdurchmesser, die Abmessungen des Lamellenquerschnittes, die Gestaltung der Auflagen an der Spreizfeder und die axialen Spielverhältnisse des eingebauten Stahlband-Ölabstreifringes in der Ringnut sind. Die typische Balligkeit der Laufflächen h und h' nach der Erfindung betragen ca. 2 bis 10 µm/0,4 mm gegenüber den Ausführungen nach dem Stand der Technik von 3 bis 15 µm/0,15 mm.

Funktionell ist die erfindungsgemäß verbesserte Ölabstreifwirkung dadurch gegeben, dass die an den Laufflächen h, h' der Lamellen in Zylinderachsrichtung angreifende Reibkraft ein Drehmoment erzeugt, welches die Lamellen tellerförmig verwölbt. Dies ist möglich, weil die Gestaltung der Spreizfeder 4 eine Bewegung der Lamellen 1 und 2 in axialer Richtung vor allem an der inneren Auflage behindert, wohingegen an der äußeren Auflage deutlich größere axiale Bewegungsamplituden möglich sind. Die Reibkraft und damit das Drehmoment wechselt abhängig von der Hubrichtung des Kolbens das Vorzeichen. Da die Höhe der Reibkraft noch geschwindigkeitsabhängig ist, hat dies eine ständige Änderung der tellerförmigen Verwölbung zur Folge, bezeichnet als dynamisches Twisten. Durch das dynamische Twisten erzeugt diejenige Lamelle, die je nach Hubrichtung an einer der Nutflanken anliegt, in Kombination mit der asymmetrischen Neigung der Lauffläche eine gute Ölabstreifwirkung - "Kante" trägt-, während die jeweils andere Lamelle aufgrund der definierten Balligkeit der Lauffläche eine verbesserte Hydrodynamik aufweist -"Fläche" trägt- , wie in Fig. 1 dargestellt. Dadurch reduziert sich die Reibleistung an dieser Lamelle, welche in vertwistetem Zustand zudem noch eine schlechtere Ölabstreifwirkung aufweist. Eine Änderung der Hubrichtung bewirkt ein Umklappen beider Lamellen in die jeweils andere Lage, wobei an den beschriebenen Verhältnissen sich dadurch prinzipiell nichts ändert.

Die lagerichtige Orientierung der Lamellen beim Zusammensetzen des mehrteiligen Stahlband-Ölabstreifringes muss beachtet werden, die beispielsweise durch eine Farbmarkierung einer der Lamellenflanken gewährleistet werden kann.

Die Herstellung der Laufflächenform- bzw. Kontur kann beispielsweise durch Läppen erfolgen.

### Bezugszeichen

- 10: Ölabstreifring
- 1: Lamelle
- 2: Lamelle
- 3: Scheitelpunktlinie (Kante)
- 3': Scheitelpunktlinie (Kante)
- 4: Spreizfeder
- 5: kolbenbodenseitige Ringnutflanke
- 6: kolbenbodenseitig abgewandte Ringnutflanke
- 7: Ringnut
- 8: Zylinderwand
- 9: Kolben
- h, h': Laufflächen
- B: Gesamtbreite der Lamelle

## Patentansprüche

1. Mehrteiliger Ölabstreifring (10) für Kolben von Verbrennungsmotoren mit zwei aus Stahlband bestehenden Lamellen (1, 2) mit parallelen Flanken, deren Laufflächen (h, h') jeweils eine ballig asymmetrische Form mit einer über den Umfang der Lamellen erstreckenden Scheitelpunktlinie (3, 3') aufweisen, sowie einer zwischen den Lamellen angeordneten Spreizfeder (4), welche die Lamellen sowohl axial gegen jeweils eine der Flanken (5, 6) einer Ringnut (7) im Kolben als auch radial gegen die Zylinderwand (8) drückt,
**dadurch gekennzeichnet,**
**dass** die Laufflächen (h, h') beider Lamellen (1, 2) im Querschnitt
- in einem ersten Abschnitt (I) der asymmetrischen Form einem Polynom 2. Ordnung mit h(x)= ax + bx² folgt, wobei
x = Laufflächenkoordinate im kartesischen Koordinatensystem in mm ist und a, b Koeffizienten, mit a definiert durch das Verhältnis des axialen Flankenspiels (aF) der Lamellen zur Breite (B) der Lamellen; b definiert als Betrag der Laufflächenkrümmung;
- einem als Kante ausgeführten tragenden Scheitel (II) h(x=0), und
- in einem dritten Abschnitt (III) der asymmetrischen Form der Funktion h(x)= cx² , mit c als einem Vielfachen von b, folgt.

2. Mehrteiliger Ölabstreifring nach Anspruch 1, **dadurch gekennzeichnet, dass** die Scheitelpunktlinien (3, 3') der Laufflächen (h, h') der Lamellen jeweils gleichsinnig zur kolbenbodenabgewandten Flanke (6) der Ringnut (8) hin orientiert sind.

3. Mehrteiliger Ölabstreifring nach Anspruch 1, dass die Laufflächen (h, h') beider Lamellen (1, 2) derart ausgebildet sind, dass sie einer verschleißnahen Endkontur im eingelaufenen Motorzustand entsprechen, wobei im montierten Zustand des Ölrings (10) im Kolben die Scheitelpunktlinien (3, 3') der Laufflächen (h, h') jeweils gegensinnig zur Mitte der Ringnut (3) hin orientiert sind.

## Claims

1. Multipart oil wiping ring (10) for pistons of internal combustion engines, having two lamellae (1, 2) consisting of steel strips and having parallel walls, the working surfaces (h, h') of which each have a spherical-like asymmetrical shape with a vertex line (3, 3') that extends over the circumference of the lamellae, as well as an expanding spring (4) arranged between the lamellae, which presses the lamellae both axially against one of the walls (5, 6) of an annular groove (7) in the piston as well as radially against the cylinder wall (8),
**characterised in that**
the working surfaces (h, h') of the two lamellae (1, 2) in cross-section,
- follows the asymmetrical shape of a polynomial of the second order in a first segment (I), with h(x)=ax+bx², wherein
x = working surface coordinates in the Cartesian coordinate system in mm, and a, b are coefficients, with a being defined by the ratio of the axial wall play (aF) of the lamellae relative to the width (B) of the lamellae; b being defined as the extent of the working surface curvature;
- a supporting vertex (II) h(x=0) configured as an edge, and
- in a third segment (III) follows the asymmetrical shape of the function h(x)=cx², with c as a multiple of b.

2. Multipart oil wiping ring according to claim 1, **characterised in that** the vertex lines (3, 3') of the working surfaces (h, h') of the lamellae are oriented in the same direction as the wall (6) of the ring groove (8) that faces away from the piston crown.

3. Multipart oil wiping ring according to claim 1, **characterised in that** the working surfaces (h, h') of the two lamellae (1, 2) are designed so that they correspond to a final contour approaching a condition of wear in the run-in state of the engine, wherein the vertex lines (3, 3') of the working surfaces (h, h') are each oriented in the opposite direction to the centre of the annular groove (3) in the assembled state of the oil ring (10) in the piston.

## Revendications

1. Segment racleur d'huile (10) en plusieurs parties pour pistons de moteurs à combustion interne, comprenant deux lamelles (1, 2) constituées de ruban d'acier avec des flancs parallèles, lamelles dont les portées (h, h') présentent chacune une forme asymétrique bombée avec une ligne de sommet (3, 3') s'étendant sur le pourtour des lamelles, ainsi qu'un ressort écarteur (4) disposé entre les lamelles, lequel ressort presse les lamelles aussi bien dans la direction axiale contre respectivement l'un des flancs (5, 6) d'une gorge annulaire (7) du piston que dans la direction radiale contre la paroi du cylindre (8), **caractérisé en ce que** les portées (h, h') des deux lamelles (1, 2) obéissent en coupe transversale
- dans une première section (I) de la forme asymétrique à un polynôme du deuxième degré avec h(x) = ax + bx², x étant égal à la coordonnée des portées dans le système de coordonnées cartésien en mm et a, b étant des coefficients, avec a défini par le rapport du jeu axial des flancs (aF) des lamelles sur la largeur (B) de ces dernières ; b défini en tant que valeur du cintrage des portées;
- à un sommet porteur (II) h(x = 0) réalisé sous forme d'arête, et
- dans une troisième section (III) de la forme asymétrique à la fonction h(x) = cx², avec c en tant qu'un multiple de b.

2. Segment racleur d'huile en plusieurs parties suivant la revendication 1, **caractérisé en ce que** les lignes de sommet (3, 3') des portées (h, h') des lamelles ont une orientation respective de même sens en direction du flanc (6) opposé au fond de piston, de la gorge annulaire (8).

3. Segment racleur d'huile en plusieurs parties suivant la revendication 1, **caractérisé en ce que** les portées (h, h') des deux lamelles (1, 2) sont configurées de telle sorte qu'elles correspondent à un contour extrême proche de l'usure à l'état de démarrage du moteur, les lignes de sommet (3, 3') des portées (h, h') étant orientées respectivement en sens contraire en direction du centre de la gorge annulaire (3) à l'état de montage du segment racleur (10) dans le piston.
